**Europäisches Patentamt**

**European Patent Office**

**Office européen des brevets**

(19)

(11) Veröffentlichungsnummer : **0 340 538 B2**

(12) **NEUE EUROPÄISCHE PATENTSCHRIFT**

(45) Veröffentlichungstag der neuen Patentschrift :
22.11.95 Patentblatt 95/47

(51) Int. Cl.⁶ : **G05B 19/416**

(21) Anmeldenummer : **89107050.0**

(22) Anmeldetag : **19.04.89**

(54) Verfahren zum Steuern der Bewegung eines Maschinenelementes.

(30) Priorität : **03.05.88 DE 3815030**

(43) Veröffentlichungstag der Anmeldung :
**08.11.89 Patentblatt 89/45**

(45) Bekanntmachung des Hinweises auf die
Patenterteilung :
**11.11.92 Patentblatt 92/46**

(45) Bekanntmachung des Hinweises auf die
Entscheidung über den Einspruch :
**22.11.95 Patentblatt 95/47**

(84) Benannte Vertragsstaaten :
**CH DE FR IT LI NL SE**

(56) Entgegenhaltungen :
**US-A- 3 893 616**
**US-A- 3 941 987**

(56) Entgegenhaltungen :
**SONDERDRUCK ETZ,1969,Band 21,Heft
12,Seiten 263-296;G.WILD " Möglichkeiten
und Verfahren der numerischen Bahnsteuerung"
SERVICE MANUAL BENDIX DYNAPATH
THOUSAND SERIES 6/1969,Abschnitte Introduction Seiten 5,6 und Feedrate Theory Seiten
1-3**

(73) Patentinhaber : **SIEMENS
AKTIENGESELLSCHAFT
Wittelsbacherplatz 2
D-80333 München (DE)**

(72) Erfinder : **Kram, Raimund, Dipl.-Ing.
Stubenlohstrasse 14E
D-8520 Erlangen (DE)**
Erfinder : **Stelzer, Jörg, Dr.
Österreicher Strasse 40
D-8520 Erlangen (DE)**

EP 0 340 538 B2

## Beschreibung

Die Erfindung bezieht sich auf ein Verfahren zum Steuern einer aus mehreren Achsbewegungen resultierenden Bewegung eines Maschinenelementes zwischen zwei Raumpunkten gemäß einstellbaren Override-Werten, d.h., dem jeweils vorzugsweise prozentualen Verhältnis der angestrebten Geschwindigkeit des Maschinenelementes zu dessen vorgegebener regulärer Betriebsgeschwindigkeit.

Wenn die Werkzeuge einer Werkzeugmaschine oder die Hand eines Roboters bewegt werden, sind daran im Regelfall eine Vielzahl von einzelnen Achsen beteiligt, so daß die resultierende Bewegungsbahn sich aus deren überlagerten Einzelbewegungen ergibt. Diese komplexe Bewegung wird durch das jeweilige Programm der die Werkzeugmaschine oder den Roboter steuernden numerischen Steuerung vorgegeben. Dabei wird diese Bewegung entsprechend der im Produktionsprozeß vorgesehenen regulären Geschwindigkeit des Systems ausgelegt. Für den Fall, daß die reguläre Geschwindigkeit reduziert werden soll, wenn beispielsweise für Testzwecke einzelne Bewegungsvorgänge eines Roboters quasi in Zeitlupe ablaufen sollen, wird dazu die Geschwindigkeit über einen sogenannten Override-Geber in einem einzustellenden prozentualen Verhältnis begrenzt. Ein derartiges Begrenzen der Geschwindigkeit führt jedoch dazu, daß die während des Bewegungsvorganges abgefahrene Bahn variant wird, d.h., der Bahnverlauf wie bei der regulären Geschwindigkeit wird nicht mehr eingehalten.

Aufgabe der Erfindung ist, ein Verfahren der eingangs genannten Art so auszubilden, daß während der Ausführung einer Bewegung des Maschinenteiles Override-Änderungen vornehmbar sind, ohne daß dadurch die resultierende Bewegungsbahn gegenüber derjenigen bei regulärer Geschwindigkeit verändert wird.

Gemäß der Erfindung wird diese Aufgabe durch die kennzeichnenden Merkmale des Anspruchs 1 gelöst.

Dadurch, daß die Veränderungsgeschwindigkeit der Override-Werte entsprechend vorgegebenen Beschleunigungswerten begrenzt wird, werden übermäßige Materialbeanspruchungen von Werkzeug und Werkstück ausgeschlossen.

Ein Ausführungsbeispiel der Erfindung ist in der Zeichnung dargestellt und wird im folgenden näher erläutert. Dabei zeigen:

FIG 1 und 2     signifikante Geschwindigkeits-Zeit-Diagramme,
FIG 3 und 4     zugehörige Weg-Zeit-Diagramme,
FIG 5     zwei Bewegungsbahnen,
FIG 6     ein Schaubild zum erfindungsgemäßen Verfahren und
FIG 7     ein Blockschaltbild einer zugehörigen Einrichtung.

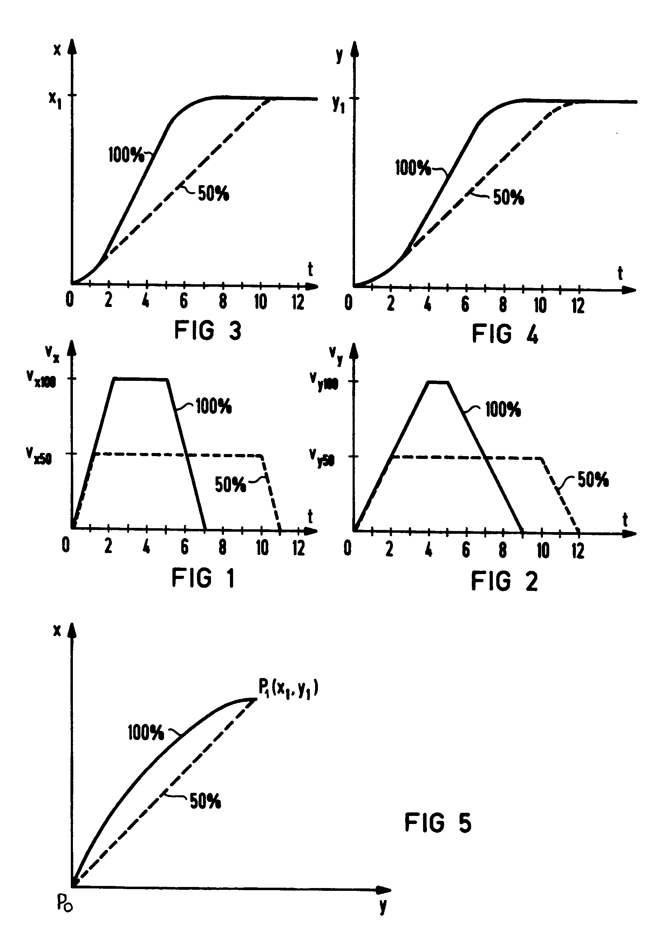

In der Darstellung gemäß FIG 1 ist mit einer durchgezogenen Linie für eine Achse X eines aus zwei kartesischen Achsen X und Y bestehenden Systems, beispielsweise eines automatischen Zeichentisches, das resultierende Geschwindigkeitsprofil $v_x = f(t)$ bei einer regulären Betriebsgeschwindigkeit mit einem Override-Wert von 100 % gezeigt. Mit einer gestrichelten Linie ist der Geschwindigkeitsverlauf für einen Override-Wert von 50 % gezeigt, wie dieser beispielsweise für Prüfzwecke zweckmäßig ist. Es wird hierbei die Absenkung der Geschwindigkeit in technisch sehr einfacher Weise so getroffen, daß die Achse X zunächst entsprechend dem Geschwindigkeitsverlauf bei 100 % Override beschleunigt wird, bis eine Geschwindigkeit $V_{x50}$ erreicht ist, die dem halben Wert der Maximalgeschwindigkeit $v_{x100}$ während des 100 % Override-Betriebs entspricht. Diese begrenzte Geschwindigkeit $V_{x50}$ wird dann solange aufrecht erhalten, bis ein Bremsbetrieb, der mit gleicher Bremsverzögerung vorgenommen wird, wie bei dem Geschwindigkeitsverlauf für Override 100 %, auf den gleichen Bremspunkt führt, wie das Geschwindigkeitsprofil bei 100 % Override.

In entsprechender Weise ist für die Achse Y des Systems der Verlauf der Geschwindigkeit $v_y$ über der Zeit t sowohl für einen Override-Wert von 100 % als auch für einen Override-Wert von 50 % dargestellt, wobei letzter Fall durch eine gestrichelte Linie angedeutet ist. Der Maximalwert der Geschwindigkeiten $v_y$ ist dabei mit $v_{y100}$ bzw. $v_{y50}$ bezeichnet.

In der Darstellung gemäß FIG 3 ist die bei Geschwindigkeitsveläufen gemäß FIG 1 resultierende jeweilige Bewegungsbahn des Weges x der Achse X über die Zeit t dargestellt. Ausgehend von einem Wert 0 des Weges x wird dabei bei einem Override von 100 % zu einer Zeit t = 7 ein dem Bewegungsbahnendpunkt zugeordneter Ort $x_1$ erreicht, während bei einem Override von 50 % (gestrichelter Verlauf) erst zu einer Zeit t = 11 dieser Ort $x_1$ erreicht wird.

In entsprechender Weise wird, wie in FIG 4 gezeigt, der Weg der Achse Y durch die zugehörige Geschwindigkeit $v_y$ für Override 100 % so beeinflußt, daß zu einer Zeit t = 9 bei 100 % Override ein dem Bewegungsbahnendpunkt zugeordneter Ort $y_1$ erreicht wird, während bei 50 % Override (gestrichelter Verlauf) erst zu einer Zeit t = 12 eben dieser Ort $y_1$ erreicht wird.

In der Darstellung gemäß FIG 5 ist die bei 100 % Override resultierende Raumkurve des kartesischen Systems aus den Wegen x und y gezeigt, die in einem Punkt $P_0$ jeweils beginnt und in einem Punkt $P_1$ mit den Koordinatenwerten $x_1$ und $y_1$ endet. Es zeigt sich, daß die resultierende Bewegungsbahn für einen Override von 100 %, wie sie mit einer durchgezogenen Linie angedeutet ist, erheblich von derjenigen Bahn abweicht, wie diese bei einem Override von 50 % (gestrichelt dargestellt) vorliegt.

Ursache dieser für Prozeßbeobachtungen irreführenden Varianz ist die Tatsache, daß bei reduzierten Override-Werten zwar die jeweiligen Geschwindigkeiten begrenzt werden, daß im unbegrenzten Bereich das Geschwindigkeitsprofil für 100 % Override jedoch erhalten bleibt.

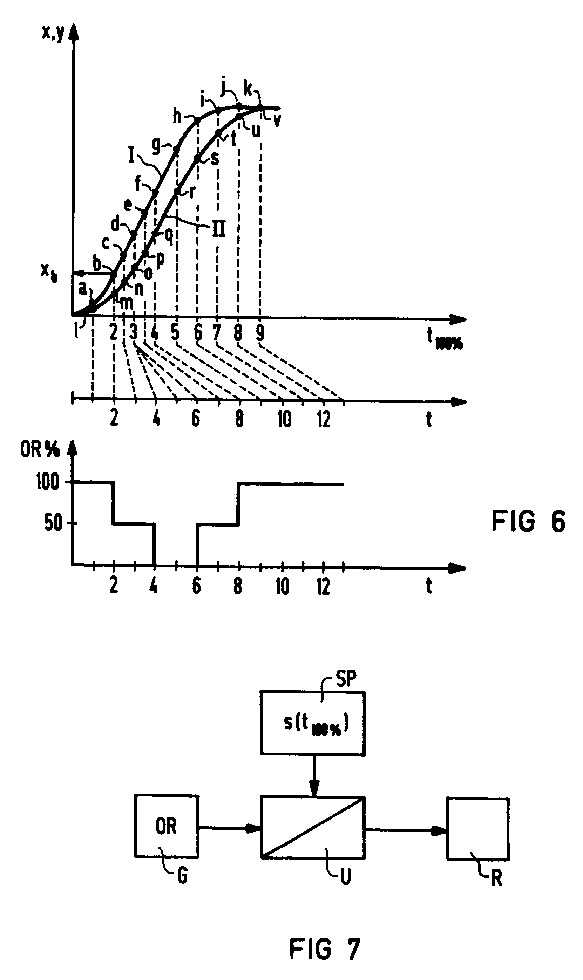

Hier setzt die Erfindung ein und in der Darstellung gemäß FIG 6 ist gezeigt, wie bei einem frei gewählten Override-Profil zu den aufeinanderfolgenden Zeitpunkten t = 0 bis t = 13 die zugeordneten Orte x und y der Achsen X und Y ermittelt werden.

Dazu ist im unteren Teil von FIG 6 ein Override-Profil gezeigt, das von einer Zeit t = 0 bis zu einer Zeit t = 2 einen Override-Wert von 100 % aufweist, der dann während einer Zeit t = 2 bis t = 4 auf 50 % Override abgesenkt wird, wobei sich an diesen Zeitabschnitt bis zur Zeit t = 6 eine Stillstandsphase anschließt, die wiederum durch einen Override-Wert von 50 % bis zu einer Zeit t = 8 fortgeführt wird, woraufhin dann bis zu einer Zeit t = 13 wieder ein Override-Wert von 100 % vorliegt.

Im oberen Teil der FIG 6 ist für die Achsen X - Kurve I - und Y - Kurve II - in einem Zeitraster $t_{100}$ % der Verlauf des jeweiligen Weges x und y bei einem Override von 100 % dargestellt. Die Bezeichnung $t_{100}$ % soll darauf hinweisen, daß es sich bei dieser Zeit $t_{100}$ % um einen Zeitverlauf bei 100 % Override handelt. Nur in diesen Fall würden die Zeitraster für t und $t_{100}$ % zusammenfallen. Die tatsächlich ablaufende Zeit t eines Betriebes mit Override, wie im unteren Teil von FIG 6 dargestellt, ist der Übersichtlichkeit halber noch einmal mit einem Bezugsstrahl im mittleren Teil von FIG 6 gezeigt. Wie durch zum oberen Teil von FIG 6 weisende gestrichelte Linien angedeutet ist, die zu Schnittpunkten a bis k mit der Kurve I und l bis v mit der Kurve II führen, werden während der Zeiten t = 1 und t = 2 die den Punkten a und b zugeordneten Wege x für die X Achse und den Punkten l und m die zugeordneten Wege y für die Y Achse der Kurve I bzw. II entnommen. Dies ist durch einen Pfeil anschaulich für den der Zeit t = 2 entsprechenden Weg $x_b$ dargestellt.

Während der folgenden zwei Zeitabschnitte, d.h. zur Zeit t = 3 und t = 4 wird jeweils von einem Override von 50 % ausgegangen. Demzufolge wird die für $t_{100}$ % aufgestellte Weg-Zeit-Kurve mit einer auf 50 % reduzierten Schrittweite abgetastet. Daher wird zur Zeit t = 3 für die X Achse der Weg x gewählt, der dem Punkt c auf der Kurve I entspricht, während für die Y Achse der Weg y gewählt wird, der dem Punkt n entspricht. Für den Zeitpunkt t = 4 werden die Punkte d und o der Kurven I und II ausgewertet.

Der Stillstand des Systems führt dazu, daß auch während der Zeitpunkte t = 5 und t = 6 weiterhin die den Punkten d und o zugeordneten Wege beibehalten werden. Das Wiederanfahren des Systems mit einem Override-Wert von 50 % ergibt, daß zur Zeit t = 7 die Punkte e bzw. p der Kurven I bzw. II abgegriffen werden, Punkte, die bei einem Override-Wert von fortlaufend 100 % einer Zeit $t_{100}$ % = 3,5 entsprechen würden. Zur Zeit t = 8 werden die Punkte f und q ausgewertet, woraufhin die Sprungweite, mit der die Kurven I und II abgetastet werden, wieder erhöht wird, weil jetzt der Override-Wert wieder auf 100 % angehoben wird. Daraus ergeben sich die Punkte g bis k und r bis v.

Das Abtasten der gespeicherten Kurven entsprechend dem vorgegebenen Override-Wert läßt sich mathematisch wie folgt formulieren:

Steuerungsintern wird eine Systemzeit $\tau$ geführt, auf die bezogen jeder Bewegungssatz in Form einer vektoriellen Funktion $\underline{f}(\tau)$ aufbereitet wird. Diese Funktion $\underline{f}(\tau)$ beschreibt die Bewegung für 100 % Override. Während der Satzbearbeitung wird die Funktion $\underline{f}(\tau)$ je Interpolationstakt einmal ausgewertet. Von einem Interpolationstakt zum anderen ist bei 100 % Override die Systemzeit jeweils um die Taktzeit $t_{IPO}$ zu erhöhen. Wird mit einem beliebigen Override c . 100 % gefahren, so wird die Taktzeit mit c gewichtet, d.h. es werden jeweils c . $t_{IPO}$ Zeiteinheiten hinzugezählt (bei 80 % Override also 0,8 $t_{IPO}$).

Anders formuliert: Bezeichnet $\tau_i$ die Systemzeit und $c_i$ den Override zum i-ten Interpolationstakt, so setzt man allgemein

$$\tau_{i+1} = \tau_i + c_i \cdot t_{IPO}$$

und wertet $\underline{f}(\tau_{i+1})$ aus.

In kontinuierlicher Näherung läßt sich mit t als externer Weltzeit die Roboterbewegung darstellen durch

$$\underline{f}(\tau(t)), \qquad \tau(t) = \int_0^t c(t') \, dt'$$

Die Anpassung des Ist-Override c(t) an den Soll-Override erfolgt über eine Override-Regelung, die Override-Änderungen so begrenzt, daß die maximalen Achsbeschleunigungen nicht überschritten werden.

In der Darstellung gemäß FIG 7 ist ein Blockschaltbild gezeigt, das die Struktur einer Steuerung zeigt, die gemäß dem erfindungsgemäßen Verfahren arbeiten kann. Dabei wird in einem Speicher SP für jede der relevanten Achsen die jeweilige Lage im Zusammenhang mit einer für 100 % Override zu sehenden Zeit $t_{100}$ % angegeben. Diese Angabe kann direkt oder über Parameter einer Funktionsvorschrift gegeben sein. Ferner wird mit einem Geber G für Override-Werte OR zwischen 0 und 100 % ein Umsetzer U beaufschlagt, dem auch

3

die Werte des Speichers SP zur Verfügung stehen. (Die Änderungsgeschwindigkeit der Override-Werte kann dabei dem Beschleunigungsvermögen von Werkzeug und Werkstück angepaßt sein.) Der Umsetzer U bestimmt entsprechend dem jeweiligen Override-Wert die Schrittweite, in der die im Speicher SP vorliegenden Kurven abgetastet werden. Die sich ergebenden Werte werden der eigentlichen Bahnsteuerung beispielsweise einer Robotersteuerung R zugeleitet.

## Patentansprüche

1. Verfahren zum Steuern einer aus mehreren Achsbewegungen (X,Y) resultierenden Bewegung eines Maschinenelementes zwischen zwei Raumpunkten ($P_0$,$P_1$) gemäß einstellbaren Override-Werten, d.h., dem jeweils vorzugsweise prozentualen Verhältnis der angestrebten Geschwindigkeit des Maschinenelementes zu dessen vorgegebener regulärer Betriebsgeschwindigkeit, **dadurch gekennzeichnet,** daß für jede Achse (X,Y) ein Weg-Zeit-Verlauf bei der jeweils vorgesehenen regulären Betriebsgeschwindigkeit mit einem Override-Wert von 100 % zwischen den Raumpunkten ($P_0$,$P_1$) in Form einer parametrischen Sollbahnkurve $\underline{f}(\tau(t))$
mit $\tau$ = Systemzeit
und t = externe Weltzeit
vorgegeben wird und daß der momentan für das Bewegen des Maschinenteiles relevante Weg-Zeit-Verlauf so ermittelt wird, daß di parametrische Sollbahnkurve gemäß der Berechnungsvorschrift

$$\tau(t) = \int_0^t c(t')\, dt'$$

mit c (t') = zeitlicher Verlauf der Override-Werte abgetastet wird und synchron mit dem Verlauf der Override-Werte für jede Achse (X,Y) eine zeitliche Dehnung des vorgegebenen Weg-Zeit-Verlaufes umgekehrt proportional zu dem jeweiligen Override-Wert vorgenommen wird.

2. Verfahren nach Anspruch 1, **dadurch gekennzeichnet,** daß die Veränderungsgeschwindigkeit der Override-Werte entsprechend vorgegebenen Beschleunigungsgrenzwerten begrenzt wird.

## Claims

1. A method for controlling the movement of a machine element between two spatial points ($P_0$, $P_1$), resulting from one of several axial movements (X,Y) according to adjustable override values, i.e. the respective ratio of the speed, preferably as a percentage, aimed at for the machine element to its predetermined regular operational speed,
characterized in that for each axis (X,Y) a path-time course between the spatial points ($P_0$, $P_1$) is predetermined with the respective provided regular operational speed, with an override value of 100%, in the form of a parametric desired track curve $\underline{f}(\tau(t))$
whereby $\tau$ = system time
and t = external universal time
and in that the path-time course currently relevant for the movement of the machine part is determined such that the parametric desired track curve is scanned according to the calculated rule

$$\tau(t) = \int_0^t c(t')\, dt'$$

whereby c (t') = temporal course of the override values and synchronously to the course of the override values for each axis (X,Y) a temporal extension of the predetermined path-time course is undertaken inversely proportional to the respective override value.

2. A method according to claim 1,
characterized in that the speed of alteration of the override values is limited corresponding to predetermined accelerating limiting values.

## Revendications

1. Procédé pour commander un déplacement, qui résulte de déplacements suivant plusieurs axes (X,Y), d'un élément de machine entre deux points de l'espace ($P_0$,$P_1$) conformément à des valeurs de commande prioritaire réglables, c'est-à-dire de préférence en fonction respectivement du rapport en pourcentage de la vitesse recherchée de l'élément de machine à sa vitesse de fonctionnement régulière prédéterminée, caractérisé en ce que pour chaque axe (X,Y) une fonction distance parcourue - temps est prédéterminée pour la vitesse de fonctionnement régulière prévue avec une valeur de commande prioritaire de 100 % entre les points de l'espace ($P_0$,$P_1$) sous la forme d'une courbe de trajectoire de consigne $\underline{f}$ ($\tau$(t)) paramètrique avec $\tau$ le temps système et t le temps universel externe et que la fonction distance parcourue - temps, qui est importante instantanément pour le déplacement de l'élément de machine, est déterminée de telle sorte que la courbe de trajectoire de consigne paramètrique est échantillonnée conformément à la formule

$$\tau(t) = \int_{0}^{t} c\,(t')\ dt'$$

où c(t') est la courbe, dans le temps, de la valeur de commande prioritaire et qu'un allongement, dans le temps, de la courbe distance parcourue - temps prédéterminée est exécutée d'une manière inversement proportionnelle à la valeur respective de commande prioritaire, en synchronisme avec la variation des valeurs de commande prioritaire pour chaque axe (X,Y).

2. Procédé suivant la revendication 1, caractérisé en ce que la vitesse de variation des valeurs de commande prioritaire est limitée en fonction de valeurs limites prédéterminées de l'accélération.

FIG 3

FIG 4

FIG 1

FIG 2

FIG 5

FIG 6

FIG 7